Europäisches Patentamt

European Patent Office

Office européen des brevets

(11) Publication number: **0 170 436**
**B1**

(12) **EUROPEAN PATENT SPECIFICATION**

(45) Date of publication of patent specification: **08.02.89**   (51) Int. Cl.⁴: **A 21 C 3/02**

(21) Application number: **85304818.9**

(22) Date of filing: **05.07.85**

(54) Apparatus for stretching a plastic raw material.

(30) Priority: **07.07.84 JP 141084/84**

(43) Date of publication of application:
**05.02.86 Bulletin 86/06**

(45) Publication of the grant of the patent:
**08.02.89 Bulletin 89/06**

(84) Designated Contracting States:
**AT BE CH DE FR GB IT LI NL SE**

(56) References cited:
**EP-A-0 084 509**
**EP-A-0 128 015**
**FR-A-1 604 291**

(73) Proprietor: **RHEON AUTOMATIC MACHINERY CO. LTD.**
**2-3, Nozawa-machi**
**Utsunomiya-shi Tochigi-ken (JP)**

(72) Inventor: **Hayashi, Torahiko**
**3-4, Nozawa-machi Utsunomiya-shi**
**Tochigi-ken (JP)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

## Description

This invention relates to apparatus for stretching a plastic raw material such as bread dough, confectionery dough or any other material. More particularly, it relates to such apparatus whereby an effective stretching of the plastic raw material can be achieved by moving it through the apparatus and the stretching can be repeated by reversing the direction of movement of the material to be stretched.

In the past, when thick dough was to be rolled into a thin dough strip in a dough stretching operation, a pair of opposed rollers have been rotated in opposite directions so that they both move in the same direction as that of movement of the dough where it comes into contact with the rollers, thereby imparting a stretching pressure to the dough. Such a process squeezes the dough. However, squeezing by merely imparting a squeezing pressure in this way is not so effective for stretching viscoelastic material such as dough, because the squeezing pressure causes turbulent flow of dough, resulting in an uneven tissue of the dough.

In another prior art apparatus dough is carried along a series of conveying devices which are driven at different speeds, and rollers disposed thereabove for rotation around an orbital path, and rotatable on their own axes, make rolling movement in the travelling direction of the conveying devices where the dough touches the rollers, thereby stretching the dough. Apparatus of this type is known from EP-A-0128015 (state of the art according to Article 54-3 and concerning therefore only novelty), which discloses apparatus for stretching a plastic raw material such as bread or confectionery dough, comprising a plurality of conveyors arranged in series to define a conveying path and adapted to be driven at different speeds, and a roller mechanism positioned above the said conveyors and comprising a plurality of rollers freely rotatable about their axes and movable along an endless roller path, the outer peripheral parts of the moving rollers forming a closed envelope having a lower straight portion spaced apart from the said conveying path defined by the conveyors, said lower straight portion and said conveying path being arranged to be inclined at an angle with respect to each other to provide a sloped space therebetween, the sloped space being adjustable by adjusting said angle.

While such apparatus obviates the difficulties encountered in the use of the above-mentioned pair of opposed rollers, the plastics raw material is conveyed in one direction only.

According to the present invention, there is provided apparatus as discussed above in connection with EP-A-0128015, wherein the said conveyors are adapted to be driven selectively forwardly or rearwardly in unison, thereby enabling feeding of the plastic raw material along the conveying path in either direction to stretch the same, said angle being adjustable to enable said sloped space to converge in either the forward or rearward conveying direction of said material.

Thus the invention provides an apparatus wherein the material such as dough to be stretched can be fed through in two directions alternately, so that the dough can be repeatedly stretched back and forth to conveniently achieve a high stretching effect. Since the angle between the lower straight portion of the roller mechanism and the conveying path is adjustable to enable the sloped space between these parts to converge in either the forward or rearward conveying direction of the dough, a high stretching effect is obtained for both conveying directions.

Some embodiments of the invention will now be described by way of example and with reference to the accompanying drawings, in which:-

Fig. 1 (A) is a side elevation view of a first embodiment of the present invention;

Fig. 1 (B) is an enlarged elevation view of a portion of the embodiment of Fig. 1 (A) showing a clearance H between a roller path and a conveying path;

Fig. 2 is a plan view of the embodiment of Fig. 1;

Fig. 3 is a side elevation view of another embodiment of the invention;

Figure 4 is a partly sectional view of a roller mechanism of the embodiment of Fig. 1;

Fig. 5 is an enlarged partly sectional view of the roller mechanism of the embodiment of Fig. 1;

Fig. 6 is a side elevation view of still another embodiment of the invention; and

Fig. 7 is a side elevation view showing a worm gearing for inclining the roller mechanism of apparatus according to the invention.

The apparatus to be described comprises a plurality of conveying devices arranged to be driven at different speeds and arranged in series, the conveying devices being capable of conveying both forwardly and rearwardly in the conveying direction, and a roller mechanism positioned above the conveying devices, the rollers being adapted to rotate around their axes and to move along an endless roller path. Dough is supplied between the conveying devices and the roller mechanism, and the dough can be fed from either end of the conveying path so as to repeat a stretching operation.

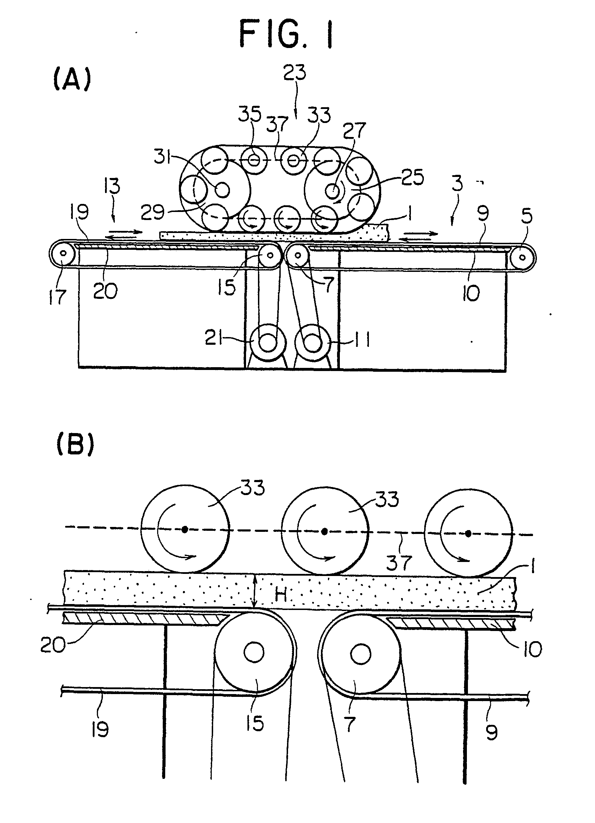

A first embodiment of the invention will now be described. A first conveyor 3 and a second conveyor 13, together constituting a conveying device, are arranged in series to provide a conveying surface for dough 1. The first and second conveyors 3 and 13 are driven by motors 11 and 21, respectively. The motors can reverse their direction of rotation so that the conveyors can travel both forwardly and rearwardly. Belts 9 and 19 of the conveyors pass around rollers 5 and 17, respectively, and over belt support plates 10 and 20, respectively. When the first and second conveyors 3 and 13 are driven in one direction (to move the dough from right to left in Fig. 1(A)), the relation between their speeds may be so selected that the speed of the first conveyor 3 is lower than that of the second conveyor 13, while, when they are driven in the other direction, the relation between their speeds may be so selected that the speed of the first conveyor 3 is higher than that of the second conveyor 13.

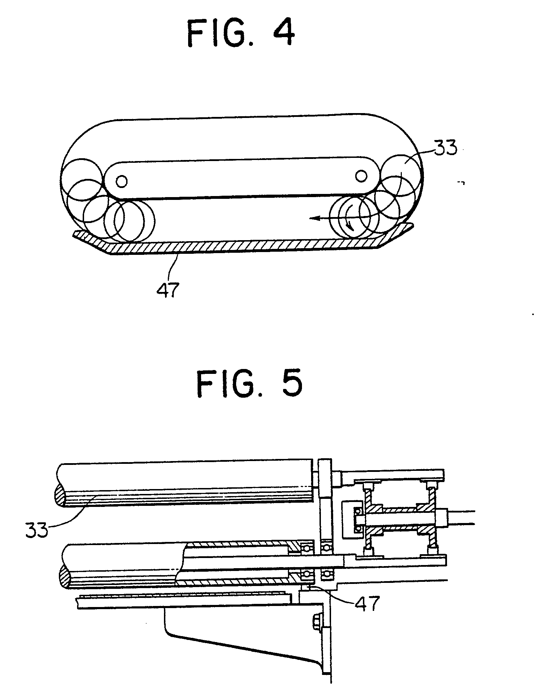

A roller mechanism 23 is positioned above the conveyors and includes a plurality of rollers 33. Each of the rollers 3 is freely mounted on a shaft 35. A chain 37 extends under tension between sprockets 25 and 29 mounted to the frame 39 of the apparatus. Since the shafts 35 are fixed to the chain 37, the shafts 35 travel with the movement of the chain, as do the rollers 33. The speed of movement of the chain 37, and consequently the rollers 33, is usually set to be much faster than the speed of either of the conveyors 3 and 13. Rails 47 may be mounted to the frame 39 of the apparatus on each side of the conveying surface. The rollers 33 revolve around their axes while they roll on the rails 47, as shown in Figs. 4 and 5. The frictional engagement of the rollers 33 with the rails 47 defines the speed of rotation of the rollers about their axes.

The clearance H between the roller mechanism 23 and the conveyance path of the conveyors 3 and 13, shown in Fig. 1 (B), can be changed in response to the thickness of the dough 1 to be stretched. To achieve this, vertical lifts 41 are fixed to the frame 39 which supports the roller mechanism 23, and are operable to raise or lower the roller mechanism 23.

The operation and effect of the present apparatus will now be described.

When the conveyors are driven forwardly, i.e. to move the dough from right to left in Fig. 1 (A), the relation between their speeds is such that the speed of the first conveyor 3 is lower than that of the second conveyor 13. As shown in Fig. 1, a body of dough 1 of a certain length is placed on the conveyor 3 and is thereby conveyed to the zone beneath a lower straight portion of the roller mechanism 23. During transfer onto the second conveyor 13, the dough 1 is stretched by a stretching force based on the speed difference between the conveyors 3 and 13, and, concurrently, by a rolling pressure imparted by the rollers 33. When the rear end of the dough 1 has passed the roller mechanism 23, the movement of the conveyors 3 and 13 is stopped and the roller mechanism 23 is lowered to decrease the clearance H. The direction of movement of the conveyors 3 and 13 is now reversed by reversing the direction of rotation of the motors 11 and 21, while the speed of the first conveyor 3 is now made to be faster than that of the second conveyor 13. These adjustments will cause the dough 1 to travel in the reverse direction, from left to right in Fig. 1 (A), and to be stretched again by the stretching force resulting from the speed difference between the conveyors 3 and 13, and, concurrently, by the rolling pressure imparted by the rollers 33, regardless of the moving direction of the rollers 33 along their orbital path, whereby the dough 1 becomes thin. Thus, a single and simple apparatus can achieve a high stretching effect by repeating a stretching operation alternately in forward and reverse directions.

The roller mechanism 23 in the present apparatus can impart rolling pressure to the dough 1 regardless of the direction of rotation of the rollers around their orbital path, because the speed of linear movement of the rollers 33 along the conveying path is usually faster than the speed of either of the conveyors 3 and 13, and because of this speed difference the rollers are made to revolve about their axes always in the same direction whether or not the conveyor movement is reversed. As a result, the working relationship between the rollers 33 and the conveyors 3 and 13 is not changed, except that the relative speed of rotation of the rollers about their axes may change. Little or no tangential strain occurs in the dough due to the rotation of the rollers 33 around their axes and their movement along the roller path. This fact can also be observed even when the rail 47 is omitted so as to cause the rollers 33 to rotate by frictional engagement with the dough 1. The use of the rails 47 is preferable, but they may be dispensed with. If they are not used, the rollers 33 rotate about their axes at a speed defined by the friction caused by their contact with the dough surface.

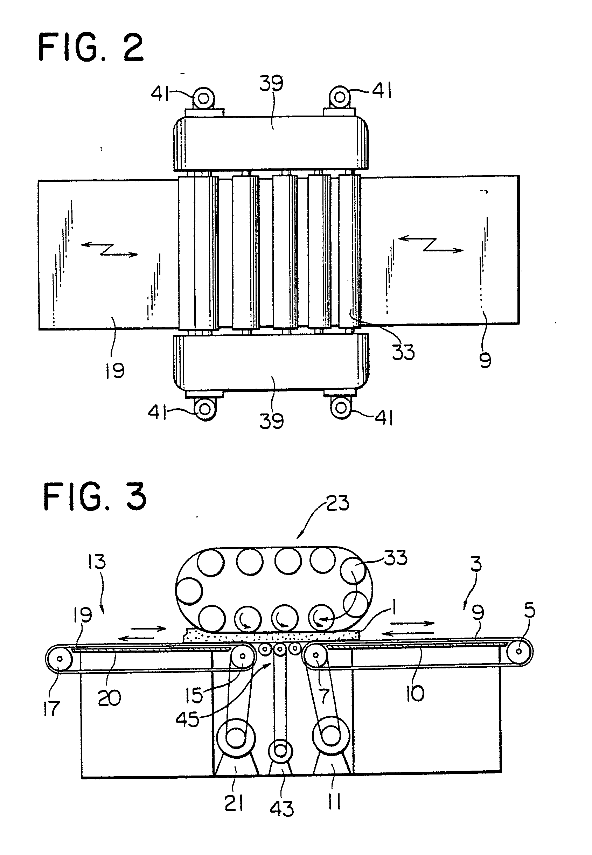

As shown in Fig. 3, apparatus according to the present invention can include a plurality of rollers 45 as a conveying device. The rollers 45 are driven by a motor 43 at a speed higher than that of the first belt conveyor 3 and lower than that of the second belt conveyor 13 when the conveyors are driven forwardly. Similarly, when the conveyors are driven in reverse, the rollers 45 are also driven in reverse at a speed higher than that of the conveyor 13 and lower than that of the conveyor 3. The same stretching effect as that in the embodiment shown in Fig. 1 (A) is thereby obtained.

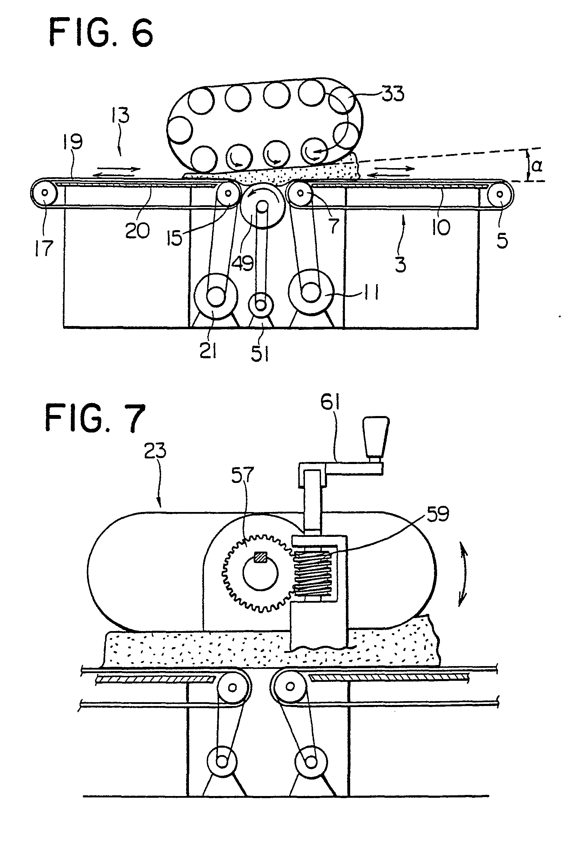

Further, a high stretching effect can be obtained when the roller mechanism 23 is inclined at a predetermined angle α with respect to the conveying path of the conveyors, as shown in Fig. 6. This inclination can be effected by, for instance, a worm gearing comprising a worm 59, a worm gear 57, and a handle 61, as shown in Fig. 7. If such an inclination is provided, a dough mass or sheet of a greater thickness may be fed into the gap between the roller mechanism 23 and the conveyors. The speed of rotation of the conveyors may also be adjusted so that the speed ratio between the conveyors is greater than when the roller mechanism 23 and the conveyors are parallel. Thus, the stretching capacity of the apparatus will increase accordingly. When a mass or sheet of dough has been stretched once, the inclination of the roller mechanism may be reversed. The dough may be folded to increase its thickness before being fed into the gap under the roller mechanism 23, repeating the stretching operation in the reverse direction upon adjusting the direction of movement of the conveyors and the relative speeds thereof. If the material to be stretched is multilayered, such as where dough layers are alternately interposed with layers of butter or margarine, the repeated stretching and folding operation will effectively increase the number of layers. Furthermore, the same effect can be performed by independently adjusting the level of the conveying path of each conveyor, rather than by adjusting the position of the roller mechanism either vertically or in inclination.

It will thus be seen that the present invention, at least in its preferred forms, provides an apparatus which can stretch a plastic raw material in a relatively simple operation; which can effectively stretch a plastic material having viscoelasticity (e.g. dough) to obtain a high compression ratio by a simple operation; wherein the direction of movement of the material to be stretched can be reversed to subject it to repeated stretching using the same apparatus; and which can multiply the number of layers of a multilayered dough sheet while stretching it.

**Claims**

1. Apparatus for stretching a plastic raw material (1) such as bread or confectionery dough, comprising a plurality of conveyors (3, 13) arranged in series to define a conveying path and adapted to be driven at different speeds, and a roller mechanism (23) positioned above the said conveyors and comprising a plurality of rollers (33) freely rotatable about their axes and movable along an endless roller path, the outer peripheral parts of the moving rollers forming a closed envelope having a lower straight portion spaced apart from the said conveying path defined by the conveyors, said lower straight portion and said conveying path being arranged to be inclined at an angle (a) with respect to each other to provide a sloped space therebetween, the sloped space being adjustable by adjusting said angle, wherein the said conveyors (3, 13) are adapted to be driven selectively forwardly or rearwardly in unison, thereby enabling feeding of the plastic raw material (1) along the conveying path in either direction to stretch the same, said angle (a) being adjustable to enable said sloped space to converge in either the forward or rearward conveying direction of said material.

2. Apparatus according to claim 1, wherein the the overall vertical spacing (H) between the lower straight portion of the roller mechanism envelope and the conveying path is also adjustable.

3. Apparatus according to claim 1 or 2, wherein the inclination of the conveying path is fixed and the roller mechanism (23) is adapted to be selectively inclined forwardly or rearwardly with respect to the said conveying path at said angle (a).

4. Apparatus according to any of claims 1 to 3, wherein the levels of the said conveyors (3, 13) are independently adjustable.

**Patentansprüche**

1. Vorrichtung zum Strecken eines plastischen Rohmaterials (1), wie Brotteig oder Konditorteig, umfassend eine Mehrzahl von zur Festlegung einer Förderstrecke in Serie geschalteten und mit unterschiedlichen Geschwindigkeiten antreibbaren Förderern (3, 13) und einen über den Förderern gelagerten Rollenmechanismus (23) mit einer Mehrzahl von um ihre Achsen frei drehbaren und entlang eines Endlos-Rollengangs beweglichen Rollen (33), wobei die äußeren Umfangsteile der sich bewegenden Rollen eine geschlossene Hülle mit einem unteren geraden Abschnitt bilden, der sich im Abstand von der von den Förderern festgelegten Förderstrecke befindet, wobei der untere gerade Abschnitt und die Förderstrecke in einem Winkel (∝) zueinander geneigt angeordnet sind, sodaß zwischen ihnen ein schräger Raum geschaffen ist, welcher schräge Raum durch Einstellen des Winkels regulierbar ist, worin die Förderer (3, 13) so gestaltet sind, daß sie wahlweise gemeinsam vorwärtsoder rückwärts antreibbar sind, wodurch die Zufuhr des plastischen Rohmaterials (1) entlang der Förderstrecke zum Strecken desselben in beide Richtungen erfolgen kann, wobei der Winkel (∝) so einstellbar ist, daß der schräge Raum entweder in der Vorwärts-Förderrichtung des Materials oder in der Rückwärts-Förderrichtung des Materials konvergieren kann.

2. Vorrichtung nach Anspruch 1, worin der vertikale Gesamtabstand (H) zwischen dem unteren geraden Abschnitt der Rollenmechanismus-Hülle und der Förderstrecke ebenfalls regulierbar ist.

3. Vorrichtung nach Anspruch 1 oder 2, worin die Neigung der Förderstrecke fix ist und der Rollenmechanismus (23) so gestaltet ist, daß er in bezug auf die Förderstrecke wahlweise vorwärts oder rückwärts im Winkel (∝) geneigt werden kann.

4. Vorrichtung nach einem der Ansprüche 1 bis 3, worin die Höhen der Förderer (3, 13) unabhängig voneinander regulierbar sind.

**Revendications**

1. Appareil pour étirer une matière crue (1), dans un état plastique, telle que de la pâte à pain ou à confiserie, comprenant plusieurs transporteurs (3, 13) disposés en série afin de définir un trajet de transport et conçus pour être entraînés à des vitesses différentes, et un mécanisme (23) à rouleaux disposé au-dessus desdits transporteurs et comprenant plusieurs rouleaux (33) pouvant tourner librement sur leurs axes et se déplacer le long d'un circuit sans fin de rouleaux, les parties périphériques extérieures des rouleaux en mouvement formant une enveloppe fermée ayant un tronçon inférieur droit espacé dudit trajet de transport défini par les transporteurs, ledit tronçon inférieur droit et ledit trajet de transport étant agencés de façon à être inclinés d'un angle (∝) l'un par rapport à l'autre pour former entre eux un espace oblique, l'espace oblique pouvant être ajusté par un réglage dudit angle, dans lequel lesdits transporteurs (3, 13) sont conçus pour être entraînés sélectivement vers l'avant ou vers l'arrière, ensemble, afin de permettre une avance de la matière crue (1), dans un état plastique, le long du trajet de transport dans chaque sens pour les tirer, ledit angle ($\propto$) étant réglable pour permettre audit espace oblique de converger dans le sens de transport vers l'avant ou vers l'arrière de ladite matière.

2. Appareil selon la revendication 1, dans lequel l'espacement vertical global (H) entre le tronçon inférieur droit de l'enveloppe du mécanisme à rouleaux et le trajet de transport est également réglable.

3. Appareil selon la revendication 1 ou 2, dans lequel l'inclinaison du trajet de transport est fixe et le mécanisme (23) à rouleaux est conçu pour être incliné sélectivement vers l'avant ou vers l'arrière par rapport audit trajet de transport, suivant ledit angle ($\propto$).

4. Appareil selon l'une quelconque des revendications 1 à 3, dans lequel les niveaux desdits transporteurs (3, 13) sont réglables de façon indépendante.

EP 0 170 436 B1

FIG. 1

(A)

(B)

# FIG. 2

# FIG. 3

# FIG. 4

33

47

# FIG. 5

33

47

# FIG. 6

# FIG. 7